# EUROPEAN PATENT SPECIFICATION

(11) **EP 2 000 364 B1**
(45) Date of publication and mention of the grant of the patent: **12.05.2010**
(21) Application number: 07425506.8
(22) Date of filing: 03.08.2007
(51) Int. Cl.: B60R 11/02, H01R 13/453, H01R 13/74, H01R 13/717

(54) **A dashboard assembly for a motor vehicle provided with a connector for connecting a portable electronic device**
Armaturenbrettanordnung für ein Kraftfahrzeug mit Anschluss für eine tragbare elektronische Vorrichtung
Planche de bord pour véhicule à moteur dotée d'un connecteur pour raccorder un dispositif electronique portable

(30) Priority: 08.06.2007 IT TO20070408
(43) Date of publication of application: 10.12.2008
(73) Proprietor: Fiat Group Automobiles S.p.A., 10135 Torino (TO) (IT)
(72) Inventor: Tardivo, Michele, 10135 Torino (IT); Varazi, Giovanni Maria, 10135 Torino (IT); Mainini, Andrea, 10135 Torino (IT)
(74) Representative: Bergadano, Mirko

(56) References cited:
- EP-A- 1 334 877
- EP-A- 1 544 955
- WO-A-2006/063137
- DE-A1-102004 035 871
- FR-A- 2 010 008

## Description

The present invention relates to a dashboard assembly for a motor vehicle provided with a connector for connecting a portable electronic device, in particular a palm-top device or a satellite navigator.

Palm-top devices and portable satellite navigators are relatively widespread, and the need is felt to use them in motor vehicles in a convenient and relatively simple way. In the passenger compartment of motor vehicles, it is known to engage the portable electronic device to a support, which, in turn, is fixed to the dashboard or to the windscreen of the motor vehicle, for example, via suction pads. The electronic device must then be connected via cables to a 12-V electrical-supply connector commonly provided in the passenger compartment. For example, for electrical supply, connectors are known generally referred to as "cigarette-lighter sockets", or else connectors of the type described in the German patent application No. DE19849800A1.

The known solutions just described are far from satisfactory, in so far as the operations of connection and disconnection on the motor vehicle of the portable electronic device are relatively inconvenient and require time and attention. In addition, the cables for connection to the electrical-supply connector are relatively cumbersome.

DE 10 2004 035871 A defines the preamble of claim 1 and discloses a plug-in system in order to fix a first assembly component and a second assembly component, in a vehicle. Such system comprises a first plug-in device which is secured to a vehicle component and several second plug-in devices which can be inserted in a positive fit to the distal end thereof in the first plug-in device. As a result, it is possible to fix different plug-in components to a plug-in place and to shape the components in an individual manner corresponding to the vehicle.

The aim of the present invention is to provide a dashboard assembly for a motor vehicle equipped with a connector for connecting a portable electronic device that will enable a simple and inexpensive solution of the problems set forth above.

According to the present invention, a dashboard assembly for a motor vehicle is provided as defined in claim 1.

The invention will now be described with reference to the annexed plates of drawings, which illustrate a non-limiting example of embodiment thereof and in which:
- Figure 1 is a partial illustration of a preferred embodiment of the dashboard assembly for a motor vehicle provided with a connector for connecting a portable electronic device, according to the present invention;
- Figure 2 is similar to Figure 1 and illustrates, at a reduced scale, the dashboard assembly and a support to be coupled to the connector of Figure 1;
- Figure 3 is a schematic cutaway view, at an enlarged scale, of the connector; and
- Figure 4 is similar to Figure 3 and illustrates a variant of the connector.

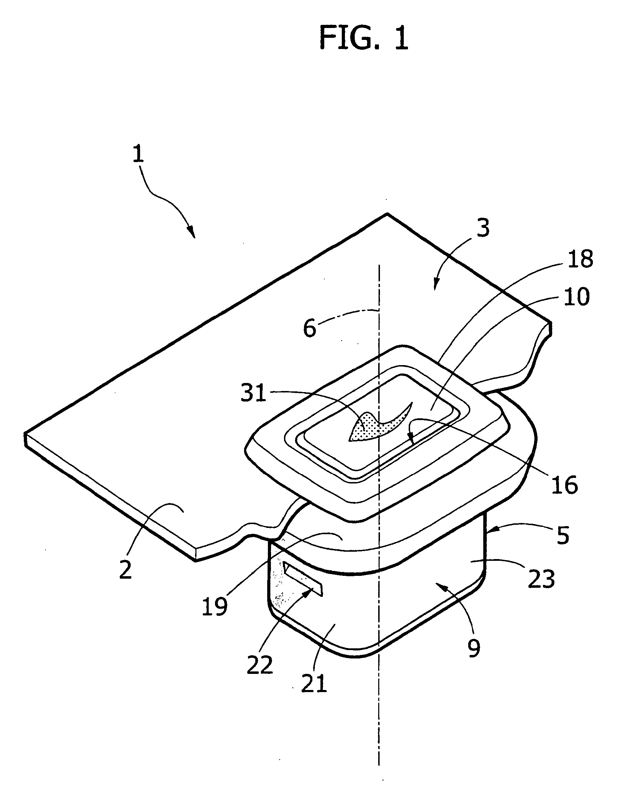

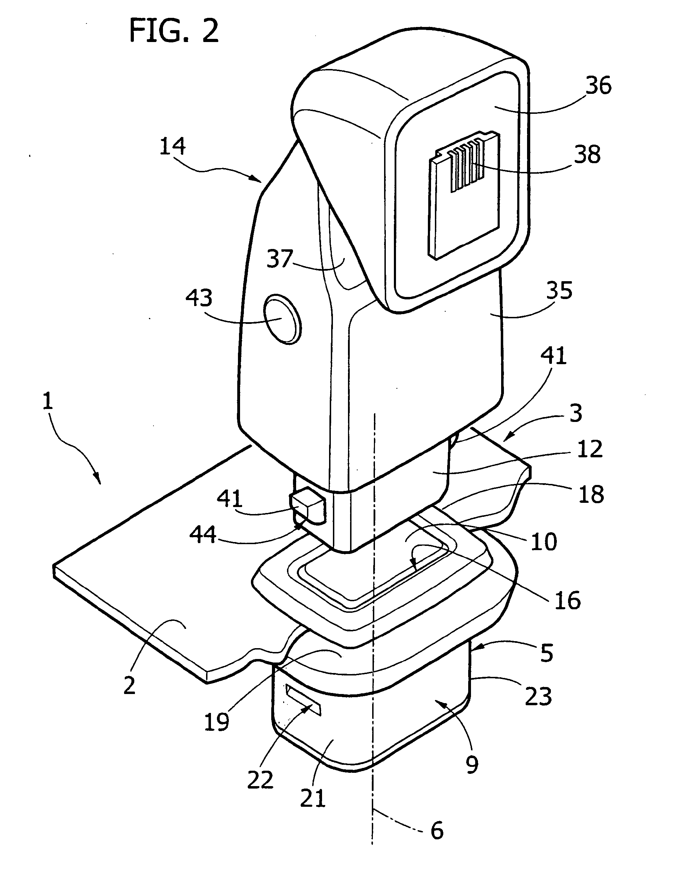

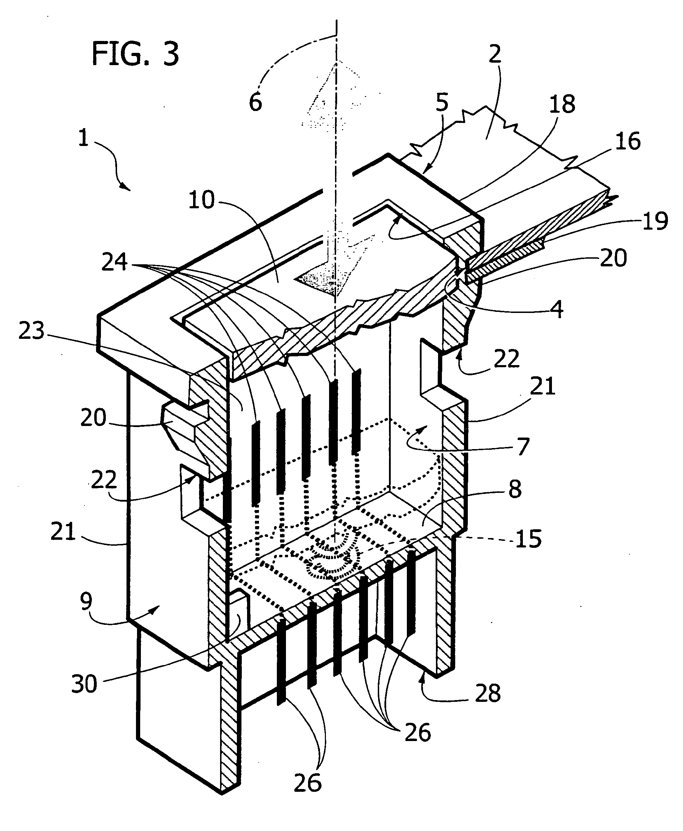

In Figures 1 to 3, the reference number 1 designates, as a whole, a dashboard assembly (partially illustrated) of a motor vehicle. The dashboard assembly 1 delimits at the front the passenger compartment of the motor vehicle and comprises a dashboard 2, which is defined by a wall with an external face 3 facing upwards and has a through opening 4 (Figure 3). The dashboard assembly 1 then comprises a connector 5, which extends through the opening 4 along a vertical or inclined axis 6 and comprises an internal seat 7. The seat 7 is defined by an end wall 8, by a side wall 9 with substantially rectangular annular rim, and by a hatch 10, opposite to the wall 8. The hatch 10 can be moved for inserting an end 12 of a support 14 into the seat 7 (Figure 2): in particular, the hatch 10 is guided by the wall 9 for translating into the seat 7 against the action of a spring 15 (partially illustrated with a dashed line) set between the wall 8 and the hatch 10, from a raised position, in which it closes an inlet 16 of the seat 7 and is set axially bearing upon an internal edge (not illustrated) of the wall 9, to a lowered position (represented with a dashed line), in which the inlet 16 is open and is engaged by the end 12.

In order to install the hatch 10 in the seat 7 against the aforesaid internal edge, the end wall 8 defines a piece that is separate from the wall 9 and that is coupled by snap action, in a way not illustrated, to the wall 9 itself, after the hatch 10 and the spring 15 have been inserted into the seat 7 from the bottom towards the inlet 16.

In a position corresponding to the inlet 16, the wall 9 terminates with an annular projection 18, which projects radially towards the outside with respect to the axis 6 and is rested axially against the edge of the opening 4. In practice, the projection 18 and the hatch 10 set in a closed position are substantially parallel to the external face 3 of the dashboard 2.

A reinforcement ring 19 is coupled in a fixed position to the internal face of the dashboard 2, via hot bonding between the plastic materials of the ring 19 and the dashboard 2. The ring 19 has an internal profile that corresponds to that of the opening 4 and comprises a reference portion (not illustrated), which enables proper orientation of the ring 19 during coupling on the internal face of the dashboard 2.

With reference to what is schematically illustrated in Figure 3, the connector 5 is coupled by snap action and clamped with respect to the dashboard 2 via elements 20 that project towards the outside from respective side faces 21 of the wall 9; for example, the connector 5 is coupled via springs (not illustrated) carried by the connector 5 or else via elastic teeth made of a single piece with the wall 9: the ring 19 and the edge of the opening 4 are set axially between the projection 18 and the elements 20. When the connector 5 is inserted axially through the opening 4 in the assembly step, the elements 20 undergo elastic deformation radially inwards, snap outwards when the connector 5 reaches the end-of-travel position (i.e., when the projection 18 comes to bear upon the face 3), and come to co-operate axially bearing upon the ring 19 on the opposite side of the dashboard 2 for withholding the connector 5. As an alternative to the elements 20, fixing could be obtained via screws (not illustrated), screwed through the projection 18 and the dashboard 2 and having their own heads hidden then by an annular cap (not illustrated), coupled by snap action to the projection 18.

The wall 9 has at least one retention hole 22 provided for withholding the end 12 engaging in the seat 7, as will be described more fully in what follows. The wall 9 comprises two faces 23 set between the faces 21: one of the faces 23 carries, in fixed positions, six electrical contacts 24 (illustrated schematically), which are parallel to the axis 6 and define the terminals of respective electrical connections insulated from one another. Said electrical connections terminate, underneath the wall 8, with respective contacts 26, which, together with the bottom end of the connector 5, define an electrical attachment or socket 28, which can be connected to the electrical system of the motor vehicle via wiring (not illustrated).

The contacts 24 are associated, respectively, to an electrical supply with a 12-V voltage (which is commonly available on motor vehicles), to an electrical ground signal, and to four electrical data-transfer signals. These four electrical data-transfer signals are in analog format (audio and video) or else digital format (for example in the format envisaged by the USB standard). Obviously, for motor vehicles having an electrical system with a 24-V voltage, instead of a 12-V voltage, also the electrical-supply signal of the connector 5 could be a 24-V signal.

The wiring that connects the connector 5 to the electrical system of the motor vehicle supplies, in a way not illustrated, also a LED 30 (schematically illustrated), which is carried by an electrical circuit set on the wall 8 in the seat 7 for back-lighting the hatch 10, which, in turn, has an area 31 permeable to light (Figure 1), defining a logo or else a wording that comes to be visible in the passenger compartment in an extremely defined way thanks to the light transmitted and coming from the LED 30.

The ring 19 forms part of a reinforcement system provided around at least part of the connector 5 for resisting vibrations and forces exerted, in use, by the support 14 on the connector 5, for example, the weight and inertial forces due to accelerations or decelerations of the motor vehicle. In combination with the ring 19, the reinforcement system could comprise reinforcement ribbings and/or areas with increased thickness on the connector 5 and/or on the dashboard 2.

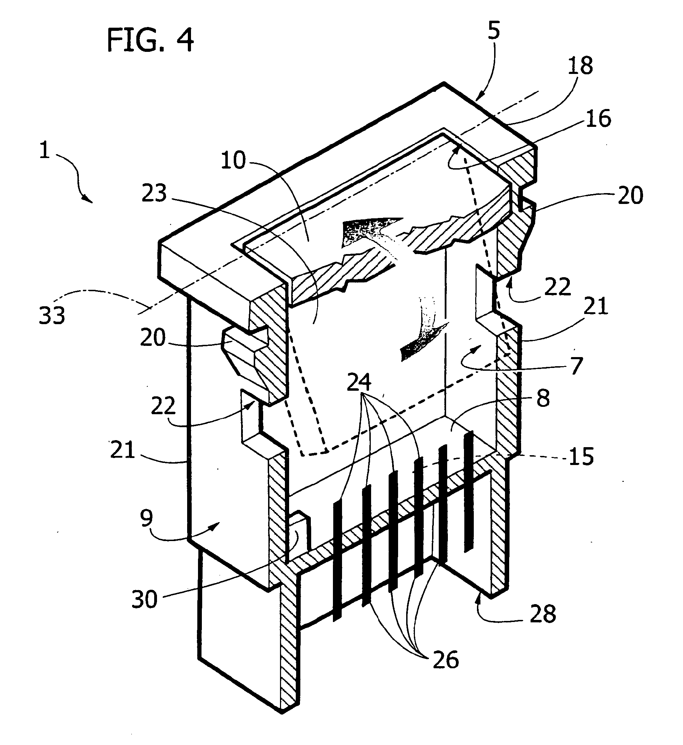

According to variant embodiments schematically illustrated in Figure 4, the contacts 24 could be arranged on the wall 8, or else at the bottom of the seat 7, and/or the hatch 10 could be hinged to the wall 9 around an axis 33, for turning from the raised position towards one of the faces 23 against the action of a spring (not illustrated) when it is pushed from the end 12 during coupling of the support 14 to the connector 5.

According to what is shown in Figure 2, the support 14 comprises a body 35 or supporting arm, which extends in cantilever fashion and vertically with respect to the dashboard 2 when the end 12 engages the seat 7. A head 36 is coupled to the body 35 via an articulated joint 37 and is configured so as to be coupled in a releasable way to a portable electronic device (not illustrated) having a display of its own, for example, to a satellite navigator or else a palm-top. The head 36 comprises both a mechanical-attachment device for fixing of the portable electronic device, and a plurality of electrical contacts 38 for transfer of the signals and of the electrical supply between the portable electronic device and the motor vehicle.

The contacts 38 constitute the terminals of respective electrical connections that extend through the articulated joint 37 and the body 35 and terminate with respective contacts (not visible in the attached figures), which are carried by the end 12 and are coupled to the contacts 24 when the end 12 engages the seat 7.

Preferably, the end 12 carries two engagement teeth 41, which are opposed and engage respective holes 22 when the seat 7 is engaged by the end 12. The teeth 41 are releasable by pressing manually two pushbuttons 43 arranged along the sides of the body 35: in particular, when the pushbuttons 43 are pressed against the elastic action of retention exerted by a spring (not illustrated), the teeth 41 recede within the end 12 so as to be able to make the end 12 to slide along the axis 6 towards the outside of the seat 7.

Instead, during insertion of the end 12 through the inlet 16, the hatch 10 opens automatically under the thrust exerted downwards of the support 14. In addition, the teeth 41 reenter automatically within the end 12 when they encounter the projection 18 in so far as they have respective profiles 44 inclined and convergent with respect to one another downwards. Once the teeth 41 reach the position of the holes 22, they automatically snap laterally outwards into the holes 22 to withhold the end 12 engaged in the seat 7.

From the foregoing description, it emerges clearly how the operations of coupling and uncoupling of the portable electronic device in the passenger compartment of the motor vehicle are extremely simple, and how it is possible to guarantee a complete communication for electrical supply and for data signals between the motor vehicle and said portable electronic device without the use of additional cables arranged in the passenger compartment.

It is moreover evident how the position of the display of the portable electronic device is stable, irrespective of the vibrations present during travel of the motor vehicle thanks to the stiffness provided by the reinforcement system and by the arm 35. The arm 35 then guarantees a convenient and clear vision of the display of the portable electronic device.

Finally, from the foregoing description, it emerges clearly that modifications and variations can be made to the dashboard assembly 1 described without thereby departing from the sphere of protection of the present invention.

In particular, the reinforcement system could be different from what is described by way of example, and/or the shape of the connector 5 could be different from the one illustrated. In addition, the portable electronic device can be connected to the electrical system of the motor vehicle so as to interact with the electronic control unit of the motor vehicle for an exchange of information and/or so as to use other devices or systems installed on the motor vehicle, for example, the loudspeakers and/or the antenna.

## Claims

1. A dashboard assembly (1) for a motor vehicle comprising:
- a dashboard (2) having a through opening (4); and
- a connector (5) engaging said opening (4) and defining a seat (7), which is accessible by opening a hatch (10) and houses:
o a contact for 12-V or 24-V electrical supply and
o at least one electrical contact for transmission of data;
- retention means (22) for withholding a support (14) of said portable electronic device engaging in said seat (7); and
- reinforcement means (19) arranged around at least part of said seat (7);
**characterised in that** said reinforcement means (19) are fixed with respect to said dashboard (2) and comprise a reinforcement ring (19) around said connector (5); said reinforcement ring (19) constituting an element distinct from said dashboard (2) and being fixed to the internal face of said dashboard (2) via hot bonding between the plastic materials of said reinforcement ring (19) and dashboard (2).

2. The dashboard assembly according to Claim 1, **characterized in that** said connector (5) is coupled by snap action to said reinforcement ring (19).

3. The dashboard assembly according to Claim 2, **characterized in that** said seat (7) is defined by a side wall (9) ending with an annular projection (18), which projects radially towards the outside; and **in that** said connector is clamped with respect to said dashboard (2) via elastic elements (20), which project towards the outside from respective side faces (21) of said side wall (9); said reinforcement ring (19) and the edge of said opening (4) being located axially between said projection (18) and said elastic elements (20).

4. The dashboard assembly according to Claim 1, **characterized in that** said seat (7) houses six electrical contacts, four of which for data signals, and two of which, one for a 12-V supply and one for connection to ground.

5. The dashboard assembly according to Claim 1 or Claim 4, **characterized in that** said retention means comprise at least one retention opening (22) provided on a side face of said seat (7).

6. The dashboard assembly according to any one of the preceding claims, **characterized in that** said contacts are arranged on a side face (23) of said seat (7).

7. The dashboard assembly according to any one of the preceding claims, **characterized in that** said hatch (10) can be moved by means of rotation towards a side face (23) of said seat (7).

## Patentansprüche

1. Armaturenbrettanordnung (1) für ein Kraftfahrzeug, umfassend:
- ein Armaturenbrett (2) mit einer Durchgangsöffnung (4), und
- einen Verbinder (5), der in die Öffnung (4) eingreift und eine Aufnahme (7) festlegt, die durch Öffnen einer Klappe (10) zugänglich ist und in welcher
• ein Kontakt für eine 12-V oder 24-V Stromversorgung und
• zumindest ein elektrischer Kontakt zur Datenübertragung aufgenommen ist,
- Rückhaltemittel (22) zum Zurückhalten einer Abstützung (14), der tragbaren elektronischen Einrichtung, die in die Aufnahme (7) eingreift, und
- Verstärkungsmittel (19), die um zumindest einen Abschnitt der Aufnahme (7) angeordnet sind,
**dadurch gekennzeichnet, dass**
die Verstärkungsmittel (19) in Bezug auf das Armaturenbrett (2) befestigt sind und einen Verstärkungsring (19) um den Verbinder (5) umfassen, wobei der Verstärkungsring (19) ein Element ausbildet, das von dem Armaturenbrett (2) verschieden ist und auf der Innenfläche des Armaturenbretts (2) durch Warmkleben zwischen den Plastikmaterialien des Verstärkungsrings (19) und des Armaturenbretts (2) befestigt ist.

2. Armaturenbrettanordnung nach Anspruch 1, **dadurch gekennzeichnet, dass** der Verbinder (5) durch einen Schnappeingriff an dem Verstärkungsring (19) befestigt wird.

3. Armaturenbrettanordnung nach Anspruch 2, **dadurch gekennzeichnet, dass** die Aufnahme (7) durch eine Seitenwand (9) festgelegt wird, die mit einem ringförmigen Vorsprung (18) endet, der sich radial in Richtung der Außenseite erstreckt, und dass der Verbinder in Bezug auf das Armaturenbrett (2) mittel elastischer Elemente (20) geklemmt ist, die sich in Richtung der Außenseite von entsprechenden Seitenflächen (21) der Seitenwand (9) erstrecken, wobei der Verstärkungsring (19) und der Rand der Öffnung (4) axial zwischen dem Vorsprung (18) und den elastischen Elementen (20) angeordnet ist.

4. Armaturenbrettanordnung nach Anspruch 1, **dadurch gekennzeichnet, dass** die Aufnahme (7) sechs elektrische Kontakte aufnimmt, von denen vier für Datensignale sind und von den verbleibenden zwei, einer für eine 12-V Versorgung und einer zur Erdung ist.

5. Armaturenbrettanordnung nach Anspruch 1 oder Anspruch 4, **dadurch gekennzeichnet, dass** die Rückhaltemittel zumindest eine Rückhalteöffnung (22), die auf der Seitenfläche der Aufnahme (7) vorgesehen ist, umfassen.

6. Armaturenbrettanordnung nach einem der vorhergehenden Ansprüche, **dadurch gekennzeichnet, dass** die Kontakte auf einer Seitenfläche (23) der Aufnahme (7) vorgesehen sind.

7. Armaturenbrettanordnung nach einem der vorhergehenden Ansprüche, **dadurch gekennzeichnet, dass** die Klappe (10) durch Drehung in Richtung einer Seitenfläche (23) der Aufnahme (7) bewegt werden kann.

## Revendications

1. Tableau de bord (1) pour véhicule à moteur, comprenant :
- une planche de bord (2) présentant une ouverture débouchante (4) ; et
- un connecteur (5) venant en prise avec ladite ouverture (4) et définissant une assise (7), accessible en ouvrant une trappe d'accès (10) et recevant:
- un contact pour un dispositif d'alimentation électrique à 12-V ou à 24-V et
- au moins un contact électrique pour transmettre des données ;
- un moyen de rétention (22) destiné à retenir un support (14) dudit dispositif électronique portable venant en prise dans ladite assise (7) ; et
- un moyen de renforcement (19) agencé autour d'au moins une partie de ladite assise (7) ;
**caractérisé en ce que** ledit moyen de renforcement (19) est fixe par rapport à ladite planche de bord (2) et comprend un anneau de renforcement (19) autour dudit connecteur (5) ; ledit anneau de renforcement (19) constituant un élément distinct de ladite planche de bord (2) et étant fixé à la face interne de ladite planche de bord (2) par collage à chaud entre les matériaux plastiques dudit anneau de renforcement (19) et de la planche de bord.

2. Tableau de bord selon la revendication 1, **caractérisé en ce que** ledit connecteur (5) est couplé par déclic audit anneau de renforcement (19).

3. Tableau de bord selon la revendication 2, **caractérisé en ce que** ladite assise (7) est définie par une paroi latérale (9) se terminant par une saillie annulaire (18), qui fait saillie radialement vers l'extérieur ; et **en ce que** ledit connecteur est fixée par rapport à ladite planche de bord (2) par le biais d'éléments élastiques (20), qui font saillie vers l'extérieur depuis des faces latérales respectives (21) de ladite paroi latérale (9) ; ledit anneau de renforcement (19) et le bord de ladite ouverture (4) étant situés axialement entre ladite saillie (18) et lesdits éléments élastiques (20).

4. Tableau de bord selon la revendication 1, **caractérisé en ce que** ladite assise (7) reçoit six contacts électriques, dont quatre sont destinés à des signaux de données, et dont deux sont destinés, l'un à fournir une alimentation 12-V et l'autre un raccordement à la terre.

5. Tableau de bord selon la revendication 1 ou la revendication 4, **caractérisé en ce que** ledit moyen de rétention comprend au moins une ouverture de rétention (22) prévue sur une face latérale de ladite assise (7).

6. Tableau de bord selon l'une quelconque des revendications précédentes, **caractérisé en ce que** lesdits contacts sont agencés sur une face latérale (23) de ladite assise (7).

7. Tableau de bord selon l'une quelconque des revendications précédentes, **caractérisé en ce que** ladite trappe d'accès (10) peut être déplacée par rotation vers une face latérale (23) de ladite assise (7).
